# EUROPÄISCHE PATENTSCHRIFT

(11) **EP 3 626 940 B1**
(45) Veröffentlichungstag und Bekanntmachung des Hinweises auf die Patenterteilung: **09.03.2022**
(21) Anmeldenummer: 19178482.6
(22) Anmeldetag: 05.06.2019
(51) Int. Cl.: F02B 39/10, F02B 37/10

(54) **VERDICHTER UND ELEKTRISCHE ANTRIEBSMASCHINE FÜR DIESEN VERDICHTER**
COMPRESSOR AND ELECTRIC DRIVE MACHINE FOR THIS COMPRESSOR
COMPRESSEUR ET MACHINE D'ENTRAÎNEMENT ÉLECTRIQUE POUR CE COMPRESSEUR

(30) Priorität: 20.09.2018 DE 102018216080
(43) Veröffentlichungstag der Anmeldung: 25.03.2020
(73) Patentinhaber: Robert Bosch GmbH, 70442 Stuttgart (DE)
(72) Erfinder: Gottwald, Frank, 71287 Weissach (DE); Baeuerle, Michael, 71735 Eberdingen (DE); Fruehschuetz, Thomas, 83607 Holzkirchen (DE); Ferlinz, Linus, 53111 Bonn (DE); Schepp, Rene, 71336 Waiblingen (DE); Mayer, Joerg, 71554 Weissach I.T. (DE); Glemser, Ralph, 74336 Brackenheim (DE); Auracher, Maximilian, 83737 Irschenberg (DE); Cavalcanti, Dalton De Paula, 70499 Stuttgart (DE)

(56) Entgegenhaltungen:
- EP-A1- 2 977 588
- WO-A1-2016/078945
- DE-T5-112004 002 481
- US-A1- 2009 220 362

## Beschreibung

### Stand der Technik

Aus dem Stand der Technik sind verschiedene elektrische Antriebsmaschinen und Turbolader bekannt. So offenbart beispielsweise die DE 10 2014 210 451 A1 einen Turbolader mit einer integrierten elektrischen Antriebsmaschine.

Turbolader, insbesondere Abgasturbolader, werden insbesondere im Kraftfahrzeugbau dazu genutzt, die Luftfüllung in Zylindern einer Brennkraftmaschine zu erhöhen, um die Leistung der Brennkraftmaschine zu steigern. Häufig werden dazu Abgasturbolader eingesetzt, die vom Abgasstrom der Brennkraftmaschine angetrieben werden.

Darüber hinaus ist es bekannt, einen Turbolader elektromotorisch zu unterstützen, sodass unabhängig von einem Abgasstrom der Brennkraftmaschine angesaugte Frischluft verdichtet und der Brennkraftmaschine mit erhöhtem Ladedruck zugeführt werden kann. Auch eine Kombination beider Varianten ist bereits bekannt. Dabei wird ein Abgasturbolader mit einer elektrischen Antriebsmaschine versehen, um die Welle des Abgasturboladers, auf welcher ein Verdichterrad sowie ein Turbinenrad drehfest angeordnet sind, anzutreiben. Hierdurch kann beispielsweise der ansonsten zeitlich verzögerte Ladedruckaufbau maßgeblich beschleunigt werden.

Eine derartige elektrische Antriebsmaschine weist üblicherweise einen Stator, der zumindest eine mehrphasige Antriebswicklung zur Erzeugung eines Antriebsmagnetfelds aufweist, und einen Rotor auf. Der Rotor weist einen Permanentmagneten auf und wird drehfest auf der Welle des Abgasturboladers angeordnet. Die Realisierung der elektromotorischen Unterstützung durch eine elektrische Antriebsmaschine hat den Vorteil, dass die motorische Unterstützung besonders bauraumsparend in den Turbolader integrierbar ist. Durch Bestromen der Phasen der Antriebswicklung mittels einer dafür vorgesehenen Leistungselektronik wird das drehende Antriebsmagnetfeld erzeugt, durch welches der durch die Welle drehbar gelagerte Rotor mit einem vorgebbaren Drehmoment angetrieben wird. Der Permanentmagnet wirkt dabei mit dem drehenden Magnetfeld zusammen.

In EP 1995 426 B1 wird ein Elektromotor beschrieben. Der Elektromotor weist einen Stator, einen Rotor mit einem Rotormagneten und eine mittlere Durchgangsöffnung zwischen dem Stator und dem Rotor auf. Der kleinste Innendurchmesser des Stators ist so groß wie der größte Außendurchmesser des Rotormagneten. Der Elektromotor ist ein Permanentmagnet-Synchronmotor. Der Rotormagnet besteht aus Seltenerdmaterial, insbesondere aus Neodymeisenbor und Samariumkobalt.

In US 8550793 B2 wird eine Verdichteranordnung zum Verdichten von Frischluft für Verbrennungsmotoren, mit einem Verdichterrad und einem Elektromotor mit mindestens einem Stator und mindestens einem Rotor, einem Rotor Magnet und einen Rotorspalt zwischen Rotor und Stator beschrieben. Der Rotorspalt ist derart ausgebildet, dass bei Drehung des Kompressorrades mindestens 50%, vorzugsweise mindestens 90%, besonders bevorzugt 100% des zu verdichtender Luftmassenstrom wird durch den Rotorspalt geführt wird.

In US 8371121 B2 wird Turbolader, umfassend: ein Turbinenrad; ein Kompressorrad, das mit dem Turbinenrad verbunden ist; ein Elektromotor, der auf einer Seite des Verdichterrads angeordnet ist, die von dem Turbinenrad entfernt ist; und einen Rotor, der drehfest mit dem Verdichterrad verbunden und frei vorspringend ausgebildet ist, beschrieben.

Weitere Turbolader mit elektrischen Antriebsmaschinen sind auch aus WO 2016/078945 A1, EP 2977588 A1, DE 11 2004 002481 T5 und US 2009/220362 A1 bekannt.

Trotz der Vorteile der aus dem Stand der Technik bekannten elektrischen Antriebsmaschinen beinhalten diese noch Verbesserungspotenzial. So ist es eine Herausforderung, das Verdichterrad des Turboladers mit einer definierten Kraft axial vorzuspannen und den Rotor ideal zur Turboladerwelle auszurichten, um eine möglichst geringe Unwucht des Gesamtsystems zu erzeugen.

### Offenbarung der Erfindung

Es werden daher einen Verdichter und eine elektrische Antriebsmaschine vorgeschlagen, die die Nachteile bekannter elektrischer Antriebsmaschinen zumindest weitgehend vermeidet und die insbesondere ausgebildet sind, das Verdichterrad des Turboladers mit einer definierten Kraft axial vorzuspannen und den Rotor ideal zur Turboladerwelle auszurichten, um eine möglichst geringe Unwucht des Gesamtsystems zu erzeugen.

In einem ersten Aspekt der vorliegenden Erfindung werden ein Verdichter und eine elektrische Antriebsmaschine für diesen Verdichter gemäß dem Anspruch 1, insbesondere für einen Abgasturbolader einer Brennkraftmaschine vorgeschlagen. Die elektrische Antriebsmaschine umfasst mindestens einen Stator. Der Stator weist mindestens eine mehrphasige Antriebswicklung zur Erzeugung eines Antriebsmagnetfelds auf. Weiterhin umfasst die elektrische Antriebsmaschine mindestens einen Rotor.

Der Rotor weist mindestens eine Rotorwelle und mindestens einen Permanentmagneten auf. Die Rotorwelle ist zum Befestigen an einer Welle des Verdichters ausgebildet. Die Welle des Verdichters ist durch eine Schraubverbindung an die Rotorwelle angebunden. Die Rotorwelle weist mindestens einen ersten Abschnitt und mindestens einen zweiten Abschnitt auf. Der zweite Abschnitt grenzt axial an den ersten Abschnitt an. Der zweite Abschnitt umschließt die Rotorwelle konzentrisch und ist mit einer Konusverbindung an den ersten Abschnitt angebunden.

Unter einem _{"}Turbolader" ist im Rahmen der vorliegenden Erfindung grundsätzlich eine beliebige Baugruppe eines Verbrennungsmotors zu verstehen, welche für eine Leistungs- und/oder Effizienzsteigerung geeignet ist. Insbesondere kann ein Teil einer Energie eines Motorabgases genutzt werden, um einen Druck in einem Ansaugsystem zu erhöhen und dadurch mehr Außenluft in einen Zylinder zu befördern als bei einem nicht aufgeladenen Motor.

Unter einer "Turbine", insbesondere einer Abgasturbine, ist im Rahmen der vorliegenden Erfindung grundsätzlich eine beliebige rotierende Strömungsmaschine zu verstehen, welche eingerichtet ist, ein Abfallen einer inneren Energie eines strömenden Fluides in eine mechanische Leistung umzuwandeln, welche sie über ihre Welle abgibt. Einem Fluidstrom kann durch eine möglichst wirbelfreie laminare Umströmung von Turbinenschaufeln ein Teil einer inneren Energie, insbesondere umfassend Bewegungsenergie, Lageenergie und/oder Druckenergie entzogen, welcher auf Laufschaufeln der Turbine übergehen kann. Über den Teil der inneren Energie kann dann die Turbinenwelle in Drehung versetzt werden und eine nutzbare Leistung kann an eine angekuppelte Arbeitsmaschine, wie beispielsweise an einen Generator, abgegeben werden. Die Abgasturbine kann eingerichtet sein, um von Auspuffgasen eines Verbrennungsmotors angetrieben zu werden. Eine Wellenleistung der Abgasturbine kann insbesondere für einen Antrieb eines Verdichters zur Aufladung eines Motors verwendet werden.

Unter einem "Verdichter" ist im Rahmen der vorliegenden Erfindung grundsätzlich eine beliebige Vorrichtung zu verstehen, welche eingerichtet ist, einem eingeschlossenen Gas mechanische Arbeit zuzuführen. Der Verdichter kann insbesondere eingerichtet sein, einen Druck und eine Dichte des Gases zu erhöhen. Der Verdichter kann daher auch als Kompressor bezeichnet werden. Der Verdichter kann insbesondere ein Radialverdichter sein. Der Radialverdichter kann eingesetzt sein, um durch einen rotierenden Läufer nach den Gesetzen der Strömungsmechanik einem strömenden Fluid Energie zuzusetzen. Der Radialverdichter kann derart ausgebildet sein, dass das Gas im Wesentlichen axial in ein Laufrad strömt und anschließend radial, d.h. nach außen abgelenkt wird.

Unter einer "elektrischen Antriebsmaschine" ist im Rahmen der vorliegenden Erfindung eine beliebige Vorrichtung zu verstehen, welche eingerichtet ist, durch ein Anlegen eines elektrischen Stroms eine Bewegung, insbesondere eine Rotationsbewegung, eines anderen Objekts zu erzeugen oder zu generieren. Insbesondere kann die elektrische Antriebsmaschine eingerichtet sein, elektrische Energie in Bewegungsenergie umzuwandeln. Insbesondere kann die elektrische Antriebsmaschine ganz oder teilweise als Elektromotor ausgestaltet sein. Insbesondere kann die elektrische Antriebsmaschine beispielsweise verwendet werden, um einen Verdichter und/oder eine Turbine, insbesondere für einen Abgasturbolader einer Brennkraftmaschine, anzutreiben. Die elektrische Antriebsmaschine kann hierfür mindestens einen Rotor und mindestens einen Stator aufweisen, welche im Nachfolgenden näher beschrieben werden.

Unter einem "Stator" ist im Rahmen der vorliegenden Erfindung ein feststehendes Bauteil einer elektrischen Antriebsmaschine, wie beispielsweise einem Elektromotor, zu verstehen, das als gemeinsamer Kern für Induktionsspulen dient. Der Stator verfügt üblicherweise über ein kreisringförmiges Statorjoch sowie radial nach innen von dem Statorjoch vorstehende Statorzähne, die in Umfangsrichtung gesehen beabstandet voneinander gleichmäßig verteilt angeordnet sind. Die Statorzähne sind üblicherweise von einer mehrphasigen Antriebswicklung umwickelt, wobei durch Bestromen der Phasen der Antriebswicklung mittels einer dafür vorgesehenen Leistungselektronik das drehende Antriebsmagnetfeld erzeugt wird, durch welches der durch die Welle drehbar gelagerte Rotor mit einem vorgebbaren Drehmoment angetrieben wird.

Unter einem "Rotor" ist im Rahmen der vorliegenden Erfindung ein rotierendes Bauteil einer elektrischen Antriebsmaschine, wie beispielsweise einem Elektromotor, zu verstehen, das alternativ auch als Läufer bezeichnet wird. Der Rotor weist dabei zweckmäßigerweise zumindest einen Permanentmagneten auf, der mit dem drehenden Magnetfeld des Stators zusammenwirkt.

Unter einer "Rotorwelle" ist grundsätzlich ein beliebiges langes zylinderförmiges Maschinenelement für einen Rotor zu verstehen, welches für ein Weiterleiten von Drehbewegungen und Drehmomenten sowie zum Tragen und Lagern von mit der Welle fest verbundenen rotierenden Teilen Verwendung finden kann. Die Rotorwelle kann an ein oder mehreren Stellen, insbesondere an zwei Stellen, drehbar gelagert sein.

Der Rotor wird mittels einer Schraubverbindung an die Welle des Verdichters angeschraubt. Weiterhin wird der Rotor mit einer Konusanbindung zu der Wellenachse ausgerichtet.

Auf diese Weise kann mittels des Rotors die axiale Vorspannung auf das Verdichterrad vorgenommen werden. Die bei herkömmlichen Turboladern zum Befestigen des Rotors benötigte Mutter kann entsprechend entfallen. Dadurch kann ein Bauteil eingespart werden, was wiederum ein Gesamtgewicht die Turboladerwellenbaugruppe reduzieren kann. Dies wiederum hat Vorteile bezüglich einer Stabilität des Rotorlaufs, was grundsätzlich eine Erhöhung der Lebensdauer der Lagerung des Turboladers bewirkt. In die Rotorwelle ist das Innengewinde zum Aufbringen einer definierten Axialkraft integriert.

Die Axialkraft kann eingerichtet sein, um das Verdichterrad des Turboladers bei hohen Drehzahlen lagerichtig zu fixieren, denn eine Bereit des Verdichterrads kann aufgrund von hohen Drehzahlen im Betrieb schrumpfen. Außerdem kann der Rotor somit von der Länge her sehr klein gebaut werden was sich bezüglich dem Gesamtgewichtes und der Schwerpunktverlagerung der Turbolagerwelle ebenfalls positiv auswirken kann.

Ein weiterer Vorteil der Konusverbindung kann sein, dass diese auf einer Drehmaschine leicht und mit hoher Genauigkeit hergestellt werden kann.

Des Weiteren kann eine Innenkontur der eine Spannungsreduzierung in der Hülse bewirken. Somit kann eine Festigkeit und eine Lebensdauer des Rotors erhöht werden.

Der Rotor kann eingerichtet sein, über das Verdichterrad positioniert zu werden. Insbesondere kann der Rotor eingerichtet sein, über ein Aufpressen des Verdichters positioniert zu werden. Über das Verdichterrad kann eine Presspassung realisiert werden. Unter einer "Passung" ist im Rahmen der vorliegenden Erfindung eine maßliche Beziehung zwischen zwei Bauteilen, die ohne Nacharbeit zusammenpassen sollen zu verstehen. Diese Bauteile haben an der Fügestelle dieselbe Kontur einmal als Innenform und einmal als Außenform. Beide Konturen haben das gleiche Nennmaß. Unterschiedlich sind die beiden Toleranzfelder, innerhalb derer das jeweilige bei der Fertigung entstehende Ist-Maß von Innenform und Außenform liegen muss.

Unter einer "Presspassung" ist im Rahmen der vorliegenden Erfindung eine maßliche Beziehung zwischen zwei Bauteilen in Form einer Innenform und einer Außenform zu verstehen, bei der das Größtmaß einer Innenkontur der Außenform in jedem Fall kleiner als ein Kleinstmaß einer Außenkontur der Innenform ist. Die Presspassung kann auch als Übermaßpassung bezeichnet werden. Das Übermaß soll grundsätzlich so gering wie möglich ausgeführt sein aufgrund eines zu erwartenden Drehmomentenanstiegs bei einer Montage des Rotors auf die Welle. Das Torsionsmoment kann grundsätzlich steigen je höher die Verpressung gewählt wird und somit kann eine Belastung auf die Welle ebenfalls steigen. Die Übermaßpassung wird bevorzugt so gering wie technisch möglich ausgeführt aufgrund des zu erwartenden Drehmomentanstiegs bei der Montage des Rotors auf die Welle. Das Torsionsmoment steigt, je höher die Verpressung gewählt wird, und somit steigt auch die Belastung auf die Welle.

Die Begriffe "erster Abschnitt, "zweiter Abschnitt", "dritter Abschnitt" sind als reine Beschreibungen anzusehen, ohne eine Reihenfolge oder Rangfolge anzugeben und beispielsweise ohne die Möglichkeit auszuschließen, dass mehrere Arten von ersten Abschnitten und/oder zweiten Abschnitten und/oder dritten Abschnitten oder jeweils genau eine Art vorgesehen sein kann. Weiterhin können zusätzliche Abschnitte, beispielsweise ein oder mehrere vierte Abschnitte vorhanden sein. Der Begriff "Abschnitt" bezeichnet grundsätzlich einen Teil oder eine Komponente eines beliebigen Elements. Der Begriff "Teilabschnitt" bezeichnet grundsätzlich einen Teil einer Komponente eines beliebigen Elements.

Unter einer "Rotorwelle" ist grundsätzlich ein beliebiges langes zylinderförmiges Maschinenelement für einen Rotor zu verstehen, welches für ein Weiterleiten von Drehbewegungen und Drehmomenten sowie zum Tragen und Lagern von mit der Welle fest verbundenen rotierenden Teilen Verwendung finden kann. Die Rotorwelle kann an ein oder mehreren Stellen, insbesondere an zwei Stellen, drehbar gelagert sein.

Die Begriffe "axiale Richtung" und "axial" bezeichnen grundsätzlich eine Richtung entlang einer Achse bzw. eine Anordnung von zwei oder mehr Elementen an einer Achse, insbesondere an einer gemeinsamen Achse. Insbesondere kann die axiale Richtung eine Richtung entlang einer Längsachse der Rotorwelle entsprechen. Somit lässt sich die Rotorwelle grundsätzlich kompakt gestalten. Der erste Abschnitt kann zwischen dem Rotor und dem zweiten Abschnitt angeordnet sein. Der erste Abschnitt und der zweite Abschnitt können in einer axialen Richtung der Rotorwelle aneinander angrenzen.

Wie bereits oben ausgeführt, umschließt der zweite Abschnitt die Rotorwelle konzentrisch und ist mit einer Konusverbindung an den ersten Abschnitt angebunden. Der Begriff "konzentrisch" bezeichnet grundsätzlich eine Anordnung von zwei oder mehr beliebigen Elementen symmetrisch um eine gemeinsame Achse. Unter einer "Konusverbindung" ist grundsätzlich eine beliebige Verbindung mit einer konischen Grundform zu verstehen. Der Begriff "konische Form" bezeichnet grundsätzlich eine Form eines beliebigen Elements, bei welchem das Element zumindest teilweise eine Form eines Kegels aufweist. Unter einem "Kegel" ist grundsätzlich ein geometrischer Körper zu verstehen, welcher entsteht, wenn man alle Punkte eines in einer Ebene liegenden, begrenzten und zusammenhängenden Flächenstücks geradlinig mit einem Punkt, insbesondere einer Spitze oder eines Scheitels, außerhalb der Ebene verbindet. Das Flächenstück kann als Grundfläche bezeichnet werden. Ist das Flächenstück eine Kreisscheibe, kann ein Kreiskegel vorliegen. Auch andere Formen des Flächenstücks sind jedoch grundsätzlich denkbar. Verbindungsstrecken der Spitze mit einer Leitkurve, d.h. einer Begrenzungslinie der Grundfläche, heißen Mantellinien. Durch die Mantellinien kann ein Kegelmandel oder eine Mandelfläche gebildet werden. Die konische Form kann insbesondere eine Form eines geraden Kreiskegels umfassen. Dabei kann eine Achse, d.h. eine Verbindungslinie zwischen der Spitze und einem Mittelpunkt der Grundfläche senkrecht zu der Grundfläche stehen. Weiterhin kann die konische Form eine Form eines schiefen Kreiskegels umfassen, bei welcher die Achse in einem Winkel abweichend von 90° zu der Grundfläche angeordnet ist. Die Achse kann sich insbesondere parallel zu der axialen Richtung entlang der Längsachse der Rotorwelle erstrecken. Der der zweite Abschnitt kann sich zum ersten Abschnitt hin verjüngen.

Der Begriff "Grundform" bezeichnet grundsätzlich, dass Abweichungen von einer gewünschten Form möglich sein können. Der zweite Abschnitt kann Abwandlungen einer konischen Form aufweisen. Insbesondere kann der zweite Abschnitt eine Form eines Kegelstumpfs aufweisen. Der Begriff "Kegelstumpf" bezeichnet grundsätzlich eine Form eines beliebigen Elements, bei welchem von einem Kegel, insbesondere einem Kreiskegel, insbesondere von einem gerade Kreiskegel, parallel zu einer Grundfläche des Kreiskegels ein Teil des Kegels, umfassend die Spitze, abgeschnitten ist. Der Kegelstumpf wird daher durch eine Deckfläche begrenzt, welche sich parallel zu der Grundfläche erstreckt. Eine Begrenzungslinie der Deckfläche kann identisch sein zu einer Begrenzungslinie des ersten Abschnitts, insbesondere zu einer Begrenzungslinie einer Stirnseite des ersten Abschnitts.

Wie bereits oben ausgeführt, ist der zweite Abschnitt hohl ausgebildet. Der zweite Abschnitt kann mindestens eine äußere Oberfläche aufweisen. Die äußere Oberfläche kann mindestens einer Mandelfläche des Kegels entsprechen. Die äußere Oberfläche kann eine Aufnahme für ein weiteres Element, insbesondere für die Welle, bilden. Insbesondere weist die Konusverbindung ein Elementepaar auf, umfassend eine konische Bohrung des zweiten Abschnitts.

Der zweite Abschnitt umfasst mindestens einen ersten Teilabschnitt und mindestens einen zweiten Teilabschnitt. Der erste Teilabschnitt weist einen ersten mittleren Durchmesser d₁ auf, wobei der zweite Teilabschnitt einen zweiten mittleren Durchmesser d₂ aufweist.

Der zweite Durchmesser d₂ ist größer als der erste Durchmesser d₁.

Die Rotorwelle kann weiterhin mindestens einen dritten Abschnitt aufweisen, der eine axiale Aufnahmevertiefung aufweist. Der Permanentmagnet kann in der axialen Aufnahmevertiefung aufgenommen sein. Damit ist eine kompakte Anordnung des Permanentmagneten in der Rotorwelle angegeben. Der Permanentmagnet kann ausgebildet sein, mittels eines Magnetfeldes, das über den Stator induziert wird, den Turbolader elektrisch anzutreiben.

Der Begriff "Aufnahmevertiefung" bezeichnet grundsätzlich eine beliebige Aufnahme, welche eingerichtet ist, um mindestens ein beliebiges Objekt zu halten, insbesondere in einer gewünschten Position, und/oder das Objekt von einer Umgebung des Objekts zu trennen. Die Aufnahme kann daher einen Hohlraum aufweisen. Der Hohlraum kann eine Form aufweisen, welche komplementär zu dem Objekt ist. Das Objekt kann Abmessungen aufweisen welche vorzugsweise kleiner sind das Abmessungen der Aufnahme. Das Objekt kann derart in der Aufnahme angeordnet sein, dass sich das Objekt in der Aufnahme bewegen kann, beispielsweise durch Kippen. Vorzugsweise ist die Aufnahme jedoch derart ausgebildet, dass eine Bewegung des Objekts innerhalb der Aufnahme vermieden oder zumindest reduziert ist. Dabei können Wände der Aufnahme in Kontakt stehen mit Oberflächen des Objekts. Der Begriff "axiale Aufnahmevertiefung" bezeichnet grundsätzlich, dass sich die Aufnahmevertiefung entlang einer Achse erstecken kann. Insbesondere kann sich eine Längsachse der axialen Aufnahmevertiefung parallel zu einer Längsachse des Rotors erstecken.

Insbesondere kann die axiale Aufnahmevertiefung mit einem Innendurchmesser zum Ausbilden einer Übermaßpassung zwischen der Rotorwelle und dem Permanentmagneten ausgebildet sein. Ein Pressverband zwischen dem Magnet und der hülsenförmigen Rotorwelle kann derart dimensioniert sein, damit das Drehmoment und die Drehzahl übertragen werden können. Des Weiteren kann der Pressverband eine Art Bandagierung bzw. Hülse für den Magneten darstellen, um diesen bei hohen Drehzahlen aufgrund der resultierenden Zentrifugalkraft und Umwelteinflüssen zu schützen.

Der Permanentmagnet kann in der in axialen Richtung der Rotorwelle zwischen einem Abstützelement und einem Verschlusselement in der axialen Aufnahmevertiefung aufgenommen sein. Das Verschlusselement kann zum Verschließen der axialen Aufnahmevertiefung ausgebildet sein. Bei einem Presssitz ohne das Abstützelement und Verschlusselement können am Austritt der Hülse über den Magneten infolge von Stützwirkung grundsätzlich höhere Fugenpressungen und Tangentialspannungen auftreten. Das Abstützelement und das Verschlusselement schützen den Magneten grundsätzlich vor diesen hohen Drucküberhöhungen an den Kanten des Magnets.

Insbesondere kann das Verschlusselement mit der Rotorwelle stoffschlüssig verbunden sein. Bevorzugt kann das Verschlusselement mit der Rotorwelle verschweißt sein. Das Verschlusselement kann mit der hülsenförmigen Rotorwelle verschweißt sein und eingerichtet sein, den Magneten vor Korrosion zu schützen. Die Schweißnaht kann weiterhin eingerichtet sein, dass sich die hülsenförmige Rotorwelle bei großen Drehzahlen trompetenförmig verformt und somit den Magneten axial nach außen schiebt. Die Schweißnaht kann axial oder radial angebracht werden.

Das Abstützelement und/oder das Verschlusselement können aus dem gleichen Material wie die Rotorwelle in dem dritten Abschnitt ausgebildet sein. Dadurch lassen sich die genannten Materialien grundsätzlich gut verbinden und weisen auch identische Materialeigenschaften wie Verformbarkeit, Wärmeausdehnung usw. auf.

Die Rotorwelle in der axialen Aufnahmevertiefung kann eine Schlüsselfläche zum Ansetzen eines Werkzeugschlüssels aufweisen. Damit lässt die Rotorwelle in einfacher Weise an der Welle des Turboladers befestigen. Weiterhin kann die Schlüsselfläche in der axialen Aufnahmevertiefung als Innensechskant oder Innen-Torx ausgebildet sein. Somit wird für die Montage der Rotorwelle an der Welle des Turboladers grundsätzlich kein Spezialwerkzeug benötigt, was die Montage erleichtert. Weiterhin kann die Schlüsselfläche in der axialen Aufnahmevertiefung in dem Verschlusselement ausgebildet sein. Somit ist die Schlüsselfläche grundsätzlich gut zugänglich.

Die Rotorwelle kann zumindest in dem dritten Abschnitt aus mindestens einem nicht-magnetischen Material hergestellt sein. Dadurch wird die magnetische Wechselwirkung zwischen Stator und Permanentmagnet grundsätzlich nicht gestört. Insbesondere kann die Rotorwelle in dem dritten Abschnitt eine geringe Wandstärke aufweisen, da diese ebenfalls Einfluss auf den Magnetfluss hat und umso geringeren störenden Einfluss auf den Magnetfluss hat, je geringer die Wandstärke ist. Die Wandstärke kann von einer maximalen Drehzahl und/oder von einem Durchmesser des Permanentmagneten abhängen. Bei höheren Drehzahlen kann der Permanentmagnet stärker verpresst und/oder bandagiert werden damit er nicht durch die Fliehkräfte beschädigt wird. Eine höhere Verpressung kann wiederum zu einer eine Zunahme der Spannung in der Hülse führen die wiederum durch ein Anheben der Wandstärke reduziert werden kann. Beispielsweise kann bei einem Magnetdurchmesser von 13,5 mm eine Wandstärke von 1.05 mm eingesetzt werden.

Die Rotorwelle kann einen an die axiale Aufnahmevertiefung angrenzenden Freistich aufweisen. Dies hat grundsätzlich Vorteile für die Montage des Abstützelements. Des Weiteren kann eine solche spezielle Innenkontur der Rotorwelle eine Spannungsreduzierung in der Rotorwelle und dem Permanentmagneten bewirken. Somit kann eine Festigkeit und Lebensdauer des Rotors erhöht sein. Außerdem kann ein solcher Freistich das Gesamtgewicht und die Gesamtlänge des Rotors reduzieren. Dimensionen des Freistichs können grundsätzlich von eine Baugröße der Rotoren abhängig sein. Je nach Durchmesser des Magneten können unterschiedliche Verpressungen benötigt werden und die Verpressungen können grundsätzlich eine unterschiedliche Belastung auf die Hülse und Magnet verursachen. Bei kleineren Magnetdurchmessern können insbesondere kleinere Verpressungen benötigt werden. Die Radien eines solchen Freistichs sind grundsätzlich abhängig von der Baugröße des Rotors. Je nach Durchmesser des Magneten werden unterschiedliche Verpressungen benötigt und diese Verpressungen verursachen eine unterschiedliche Belastung auf die Hülse und Magnet. Kleinere Durchmesser des Permanentmagneten benötigen kleinere Verpressungen, so dass hier dann kleinere Radien realisierbar sind. Beispielsweise kann bei einem Permanentmagnet mit einem Durchmesser von 17,9 mm ein Freistich mit einem Radius von 2,5 mm realisiert werden. Beispielsweise kann bei einem Permanentmagnet mit einem Durchmesser von 13,5 mm ein Freistich mit einem Radius von 1,6 mm, insbesondere von 1,625 mm, realisiert werden.

Die Rotorwelle kann an einer Außenfläche eine Schlüsselfläche zum Ansetzen eines Werkzeugschlüssels aufweisen. Damit kann die Schlüsselfläche gut von außen zugänglich sein, was die Montage der Rotorwelle an der Welle des Turboladers grundsätzlich erleichtert. Die Schlüsselfläche kann zweiflach-, vierkant oder sechskant-förmig ausgebildet sein. Somit kann für die Montage der Rotorwelle an der Welle des Turboladers kein Spezialwerkzeug benötigt werden, was die Montage grundsätzlich erleichtert.

Die Rotorwelle kann an einer Außenfläche einen Befestigungsabschnitt zum Befestigen einer Spannzange aufweisen. Somit kann für eine Montage der Rotorwelle an der Welle des Turboladers grundsätzlich kein Spezialwerkzeug benötigt werden, was die Montage grundsätzlich erleichtert.

Unter einer "Spannzange" ist im Rahmen der vorliegenden Erfindung ein Spannmittel zu verstehen, um Werkstücke bzw. Werkzeuge mit hoher Genauigkeit schnell und kraftschlüssig aufzuspannen. Sie besteht aus einer außen kegelförmigen radial geschlitzten Hülse mit einer runden, mitunter auch quadratischen oder sechseckigen Bohrung definierter Größe. Zu einer Spannzange gehört eine Spannzangenaufnahme mit einem zur Spannzange passenden Innenkegel. Gespannt wird durch Anziehen einer Überwurfmutter, mit der die Spannzange in den Innenkegel der Spannzangenaufnahme gedrückt wird. Durch die Schlitzung der Spannzange wird die Bohrung in ihrem Innern gleichmäßig zusammengedrückt, wodurch das Werkstück oder Werkzeug kraftschlüssig festgehalten wird. Der Spannbereich einer Spannzange ist sehr gering, dadurch müssen für verschiedene Durchmesser Spannzangen mit entsprechenden Abmessungen vorgehalten werden. Spannzangen spannen blanke oder bearbeitete Teile schnell, fest und genau zentrisch.

Wie bereits oben ausgeführt, ist die Welle durch die Schraubverbindung an die Rotorwelle angebunden. Der Begriff "Schraubverbindung" bezeichnet grundsätzlich eine beliebige Verbindung zwischen einem ersten Element und einem zweiten Element durch ein Ineinandergreifen von einem Gewinde des ersten Elements und einem Gewinde des zweiten Elements. Der erste Abschnitt kann ein Innengewinde aufweisen, welches zum Greifen in ein Außengewinde der Welle ausgebildet ist. Insbesondere kann die Welle durch die Schraubverbindung an den ersten Abschnitt der Rotorwelle angebunden sein.

Das Innengewinde kann ein Innenfeingewinde oder ein Innenregelgewinde sein.

Für die Montage kann somit kein spezielles Gewinde benötigt werden. Ein Feingewinde weist gegenüber einem Regelgewinde grundsätzlich einen Vorteil hinsichtlich der höheren Selbsthemmung auf. Unter einem "Regelgewinde" ist im Rahmen der vorliegenden Erfindung ein standardisiertes Gewinde mit metrischen Abmessungen zu verstehen. Üblicherweise weist dieses einen 62° Flankenwinkel. Derartige Gewinde sind beispielsweise nach der DIN 13-1 genormt. Unter einem "Feingewinde" ist im Rahmen der vorliegenden Erfindung ein Gewinde zu verstehen, das im Vergleich zum Regelgewinde ein engeres Gewindeprofil hat. Zur Unterscheidung wird es üblicherweise zusätzlich zum Außendurchmesser mit dem Maß seiner ebenfalls kleineren Steigung gekennzeichnet.

In einem weiteren Aspekt der vorliegenden Erfindung werden der Verdichter und die elektrische Antriebsmaschine mit einem Gehäuse angeordnet, in dem die Welle drehbar gelagert ist.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Schnittansicht eines Turboladers mit einer elektrischen Antriebsmaschine gemäß einer Ausführungsform der vorliegenden Erfindung,
- Figur 2: eine perspektivische Ansicht einer Rotorwelle gemäß einem ersten Ausführungsbeispiel,
- Figur 3: eine perspektivische Ansicht einer Rotorwelle gemäß einem zweiten Ausführungsbeispiel, und
- Figuren 4A und 4B: eine perspektivische Ansicht einer Spannzange (Figur 4A) und eine Schnittansicht eines Rotors (Figur 4B).

### Ausführungsformen der Erfindung

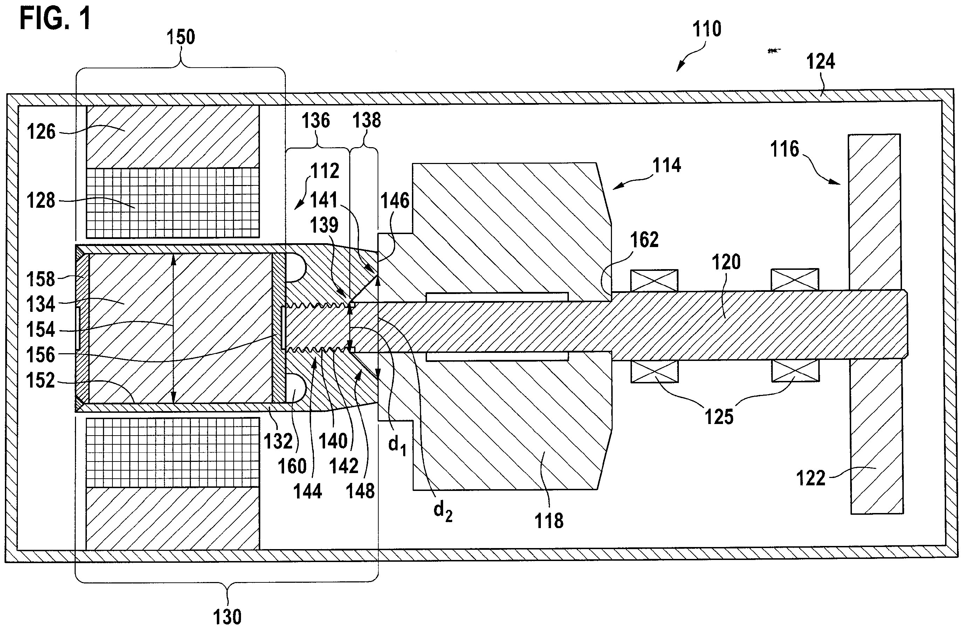

Figur 1 zeigt eine Längsschnittansicht eines Turboladers 110 mit einer elektrischen Antriebsmaschine 112 gemäß einer Ausführungsform der vorliegenden Erfindung. Der Turbolader 110 ist als Abgasturbolader einer Brennkraftmaschine ausgebildet. Der Turbolader 110 weist einen Verdichter 114 sowie eine Turbine 116 auf. Der Verdichter 114 weist ein Verdichterrad 118 auf, das auf einer Welle 120 des Turboladers 110 drehfest angeordnet ist. Die Welle 120 kann selbst drehbar in einem Gehäuse 124 des Turboladers 110 gelagert sein. An einem von dem Verdichterrad 118 abgewandten Ende der Welle 120 kann außerdem ein Turbinenrad 122 der Turbine 116 drehfest mit der Welle 120 verbunden sein. Wenn das Turbinenrad 122 vom Abgas einer Brennkraftmaschine angeströmt und dadurch angetrieben wird, wird damit das Verdichterrad 118 ebenfalls in eine Drehbewegung versetzt, so dass dem Verdichterrad 118 zugeführte Frischluft verdichtet und der Brennkraftmaschine zugeführt wird.

Die drehbare Lagerung der Welle 120 in dem Gehäuse 124 kann auf unterschiedliche Arten realisiert werden. Beispielsweise kann vorgesehen sein, dass die Welle 120 durch wenigstens zwei Lager 125 in dem Gehäuse 124 drehbar gelagert ist. Vorzugsweise sind als Lager 125 zwei Spezialgleitlager vorhanden. Zur axialen Lagerung der Welle 120 kann auch vorgesehen sein, dass eines der Spezialgleitlager als Axialgleitlager ausgebildet ist. Alternativ kann vorgesehen sein, dass ein Lager als Magnetlager ausgebildet ist, und das andere Lager, das als Axiallager dient, als Wälzkörperlager.

Damit insbesondere der Verdichter 114 unabhängig vom Abgasstrom der Brennkraftmaschine antreibbar ist, so dass jederzeit eine hohe Zylinderluftfüllung in den Zylindern der Brennkraftmaschine erreicht werden kann, ist vorliegend außerdem vorgesehen, dass der Turbolader 110 eine elektrische Antriebsmaschine 112 aufweist. Die elektrische Antriebsmaschine 112 ist vorliegend dem Verdichter 114 zugeordnet bzw. grenzt an diesen an, wie nachstehend ausführliche beschrieben wird.

Die elektrische Antriebsmaschine 112 weist einen Stator 126 auf. Der Stator 126 weist zumindest eine mehrphasige Antriebswicklung 128 zur Erzeugung eines Antriebsmagnetfelds auf. Die elektrische Antriebsmaschine 112 weist weiterhin einen Rotor 130 auf. Der Rotor 130 ist koaxial von dem Stator 126 umgeben. Der Rotor 130 weist eine Rotorwelle 132 und einen Permanentmagneten 134 auf. Die Rotorwelle 132 ist zum Befestigen an der Welle 120 des Verdichters 114 und/oder der Turbine 116 ausgebildet.

Die Rotorwelle 132 weist mindestens einen ersten Abschnitt 136 und einen zweiten Abschnitt 138 auf. Der erste Abschnitt 136 und der zweite Abschnitt 138 grenzen in axialer Richtung der Rotorwelle 132 aneinander an. Die Welle 120 ist durch eine Schraubverbindung 144 an die Rotorwelle 132, insbesondere an den ersten Abschnitt 136 der Rotorwelle 132, angebunden.

Der erste Abschnitt 38 kann ein Innengewinde 140 aufweisen. Das Innengewinde 140 kann ein Innenfeingewinde sein. Alternativ kann das Innengewinde 140 ein Innenregelgewinde sein.

Das Innengewinde 140 ist zum Greifen in ein Außengewinde 142 der Welle 120 des Verdichters 114 bzw. der Turbine 116 ausgebildet.

Der zweite Abschnitt 138 ist hohl ausgebildet. Der zweite Abschnitt 138 umschließt die Rotorwelle 132 konzentrisch und ist mit einer Konusverbindung 148 an den ersten Abschnitt 136 angebunden Eine Zentrierung kann über den Verdichter 114 erfolgen. Der zweite Abschnitt 138 kann sich zum ersten Abschnitt 136 hin verjüngen.

Der zweite Abschnitt umfasst mindestens einen ersten Teilabschnitt 139 und mindestens einen zweiten Teilabschnitt 141.

Der erste Teilabschnitt 139 weist einen ersten mittleren Durchmesser d₁ auf und der zweite Teilabschnitt 141 weist einen zweiten mittleren Durchmesser d₂ auf. Der zweite mittlere Durchmesser d₂ ist größer als der erste mittlere Durchmesser d₁.

Wie in Figur 1 gezeigt, ist der Rotor 130 mittels der Rotorwelle 132 auf der Welle 120 des Verdichters 114 befestigt. Der zweite Abschnitt 138 grenzt an ein Ende 146 der Rotorwelle 132 an. Das Ende 146 ist im befestigten Zustand der Rotorwelle 132 dem Verdichterrad 118 zugewandt und liegt an diesem an.

Die Rotorwelle 132 weist weiterhin einen dritten Abschnitt 150 auf. Der dritte Abschnitt 150 befindet sich am dem Ende 146 gegenüberliegenden Ende der Rotorwelle 132. Der dritte Abschnitt 150 weist eine axiale Aufnahmevertiefung 152 auf. Der Permanentmagnet 134 ist in der axialen Aufnahmevertiefung 152 aufgenommen. Der Permanentmagnet 134 ist aus NdFeB oder SmCo hergestellt. Der Permanentmagnet 134 ist ausgebildet, mittels eines Magnetfeldes, das über den Stator 126 induziert wird, den Turbolader 110 elektrisch anzutreiben. Die axiale Aufnahmevertiefung 152 weist einen Innendurchmesser 154 auf, der zum Ausbilden einer Übermaßpassung zwischen der Rotorwelle 132 und dem Permanentmagneten 134 ausgebildet ist. Die Rotorwelle 132 umgibt den Permanentmagneten 134 somit hülsenförmig. Der Pressverband zwischen Permanentmagnet 134 und hülsenförmiger Rotorwelle sollte ausreichend dimensioniert sein, damit er das notwendige Drehmoment und Drehzahl übertragen kann. Ein solcher Pressverband stellt eine Art Bandagierung bzw. Hülse für den Permanentmagneten 134 dar, um diesen bei hohen Drehzahlen aufgrund der resultierenden Zentrifugalkraft und Umwelteinflüssen zu schützen. Der Permanentmagnet 134 ist in axialer Richtung der Rotorwelle 136 zwischen einem Abstützelement 156 und einem Verschlusselement 158 in der axialen Aufnahmevertiefung 152 aufgenommen. Folglich ist der Permanentmagnet 134 in axialer Richtung der Rotorwelle 132 gesehen sandwichartig zwischen dem Abstützelement1 56 und dem Verschlusselement 158 eingespannt. Das Abstützelement 156 befindet sich dabei näher zu dem ersten Abschnitt 136 bzw. zweiten Abschnitt 158 als das Verschlusselement 158. Das Verschlusselement 158 ist zum Verschließen der axialen Aufnahmevertiefung 152 ausgebildet. So ist das Verschlusselement 158 mit der Rotorwelle 132 stoffschlüssig verbunden. Bevorzugt ist das Verschlusselement 158 mit der Rotorwelle 132 verschweißt. Die Schweißnaht kann dabei axial oder radial in das Verschlusselement 158 und die Rotorwelle 132 eingebracht sein. Dies schützt den Permanentmagneten 134 vor Korrosion. Das Abstützelement 156 ist aus dem gleichen Material wie die Rotorwelle 132 in dem dritten Abschnitt 150 ausgebildet. Alternativ oder zusätzlich ist das Verschlusselement 158 aus dem gleichen Material wie die Rotorwelle 132 in dem dritten Abschnitt 150 ausgebildet. Der Stator 126 umgibt den Rotor 130 im Bereich des dritten Abschnitts 150 der Rotorwelle 132. Um keinen störenden Einfluss auf einen Magnetfluss des Permanentmagneten 134 zu haben, ist die Rotorwelle 132 zumindest in dem dritten Abschnitt 150 aus einem nicht-magnetischen Material hergestellt. Die Rotorwelle 132 weist weiterhin einen an die axiale Aufnahmevertiefung 152 angrenzenden Freistich 160 auf. Dies hat Vorteile für die Montage des Abstützelements 156. Des Weiteren bewirkt eine solche spezielle Innenkontur der Rotorwelle 132 eine Spannungsreduzierung in der Rotorwelle 132 und dem Permanentmagneten134. Somit wird die Festigkeit und Lebensdauer des Rotors 130 erhöht. Außerdem bewirkt ein solcher Freistich 160, das Gesamtgewicht und die Gesamtlänge des Rotors 130 zu reduzieren.

Der Rotor 130 wird an der Welle 120 des Abgasturboladers 110 befestigt, in dem die Rotorwelle 132 mittels des Innengewindes 140 auf die Welle 120 geschraubt wird. Wie in Figur 1 gezeigt, liegt das Verdichterrad 118 an einem Anschlag 162 der Welle 120 an. Durch das Schrauben wird eine axiale Kraft auf das Verdichterrad 118 aufgebracht. So wird die Rotorwelle 132 derart an der Welle 120 befestigt, dass das Verdichterrad 118 axial vorgespannt ist. So wird die Rotorwelle 132 mit einer axialen Kraft von 4 kN bis 13 kN auf die Welle 120 geschraubt, wie beispielsweise mit einer axialen Kraft von 13 kN. Die Übermaßpassung zwischen der Rotorwelle 132 und der Welle 20 in dem zweiten Abschnitt 138 der Rotorwelle 132 zentriert dabei den Rotor 130 zur Welle 120.

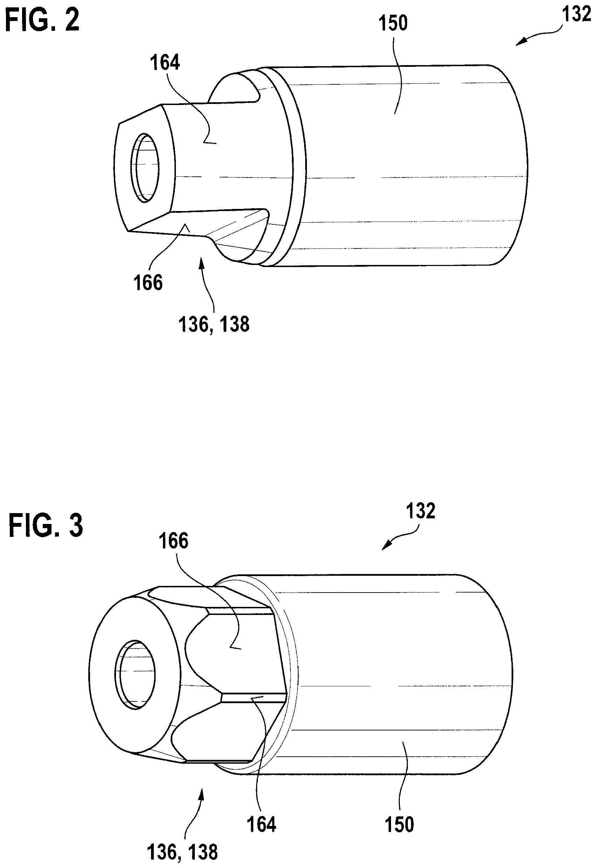

Figur 2 zeigt eine perspektivische Ansicht einer Rotorwelle 132 gemäß einem ersten Ausführungsbeispiel. Zum Erleichtern der Montage des Rotors 130 an der Welle 120 kann die Rotorwelle 132 eine Form aufweisen, die das Ansetzen eines Montagewerkzeugs erlaubt. Wie in Figur 2 gezeigt, weist die Rotorwelle 132 an einer Außenfläche 164 eine Schlüsselfläche 166 zum Ansetzen eines Werkzeugschlüssels auf. Die Schlüsselfläche 166 befindet sich an dem ersten Abschnitt 136 und dem zweiten Abschnitt 138. Bei dem in Figur 2 gezeigten Ausführungsbeispiel ist die Schlüsselfläche 166 zweiflach- förmig ausgebildet.

Figur 3 zeigt eine perspektivische Ansicht einer Rotorwelle 132 gemäß einem zweiten Ausführungsbeispiel. Nachstehend werden lediglich die Unterschiede zu dem ersten Ausführungsbeispiel Rotorwelle 132 beschrieben und gleiche Bauteile sind mit gleichen Bezugszeichen versehen. Wie in Figur 3 gezeigt, kann die Schlüsselfläche 166 sechskant-förmig ausgebildet sein. Alternativ kann die Schlüsselfläche 166 vierkant-förmig ausgebildet sein.

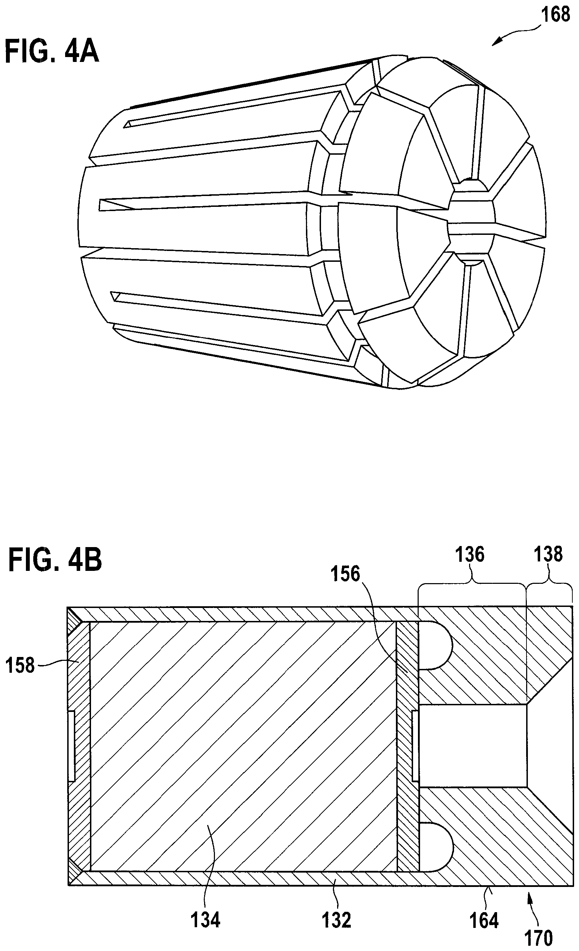

Figur 4A zeigt eine perspektivische Ansicht einer Spannzange 168 und Figur 4B zeigt eine Schnittansicht einer Rotorwelle 132. Die Außenfläche 164 der Rotorwelle 132 weist einen Befestigungsabschnitt 170 zum Befestigen der Spannzange 168 auf. Entsprechend kann der Rotor 130 mittels der Spannzange 168 an der Welle 120 befestigt werden, insbesondere in dem man die Welle 120 im Bereich des Turbinenrads festhält/kontert.

## Patentansprüche

1. Verdichter (114) und elektrische Antriebsmaschine (112) für diesen Verdichter (114), wobei der Verdichter (114) ein Verdichterrad (118) aufweist, die elektrische Antriebsmaschine umfassend mindestens einen Stator (126), wobei der Stator (126) mindestens eine mehrphasige Antriebswicklung (128) zur Erzeugung eines Antriebsmagnetfelds aufweist, und
mindestens einen Rotor (130), wobei der Rotor (130) mindestens eine Rotorwelle (132) und mindestens einen Permanentmagneten aufweist, wobei die Rotorwelle (132) zum Befestigen an einer Welle (120) des Verdichters (114) ausgebildet ist, wobei die Welle (120) des Verdichters (114) durch eine Schraubverbindung (144) an die Rotorwelle (132) angebunden ist,
die Rotorwelle (132) mindestens einen ersten Abschnitt (136) und mindestens einen zweiten Abschnitt (138) aufweist, wobei der zweite Abschnitt (138) axial an den ersten Abschnitt (136) angrenzt, wobei der zweite Abschnitt (138) die Rotorwelle (132) konzentrisch umschließt und mit einer Konusverbindung (148) an den ersten Abschnitt (136) angebunden ist,
wobei der zweite Abschnitt (138) hohl ausgebildet ist und an ein Ende (146) der Rotorwelle (132) angrenzt und dieses Ende (146) im befestigten Zustand der Rotorwelle (132) dem Verdichterrad (118) zugewandt ist und die Welle (120) des Verdichters (114) durch die Schraubverbindung (144) an dem ersten Abschnitt (136) der Rotorwelle (132) angebunden ist,
**dadurch gekennzeichnet, dass** der Rotor (130) an der Welle (120) befestigt ist, in dem die Rotorwelle (132) mittels eines Innengewindes (140) auf die Welle (120) geschraubt ist,
wobei der zweite Abschnitt (138) einen ersten Teilabschnitt (139) und mindestens einen zweiten Teilabschnitt (141) umfasst, wobei der erste Teilabschnitt (139) einen ersten mittleren Durchmesser (d1) aufweist und der zweite Teilabschnitt (141) einen zweiten mittleren Durchmesser (d2) aufweist, wobei der zweite mittlere Durchmesser (d2) größer ist als der erste mittlere Durchmesser (d1), wodurch an dem zweiten Abschnitt (138) eine konische Bohrung gebildet ist, wobei die Konusverbindung (148) ein Elementepaar umfasst, wobei das Elementepaar aus der konischen Bohrung des zweiten Abschnitts (138) und einer konischen Außenkontur eines in die konische Bohrung eingreifenden Vorsprungs am Verdichterrad (118) gebildet ist, wobei das Ende (146) im befestigten Zustand der Rotorwelle (132) an dem Verdichterrad (118) anliegt.

2. Verdichter und elektrische Antriebsmaschine (112) nach einem der vorhergehenden Ansprüche, wobei der Rotor (130) eingerichtet ist, über ein Aufpressen des Verdichters (114) positioniert zu werden.

3. Verdichter und elektrische Antriebsmaschine (112) nach einem der vorhergehenden Ansprüche, wobei die Konusverbindung (148) eine Form eines Kegelstumpfs aufweist.

4. Verdichter und elektrische Antriebsmaschine (112) nach einem der vorhergehenden Ansprüche, wobei die Rotorwelle (132) einen dritten Abschnitt (150) aufweist, wobei der dritte Abschnitt (150) eine axiale Aufnahmevertiefung (152) aufweist, wobei der Permanentmagnet (134) in der axialen Aufnahmevertiefung (152) aufgenommen ist.

5. Verdichter und elektrische Antriebsmaschine (112) nach dem vorhergehenden Anspruch, wobei der Permanentmagnet (134) in axialer Richtung der Rotorwelle (132) zwischen einem Abstützelement (156) und einem Verschlusselement (158) in der axialen Aufnahmevertiefung (152) aufgenommen ist, wobei das Verschlusselement (158) zum Verschließen der axialen Aufnahmevertiefung (152) ausgebildet ist.

6. Verdichter und elektrische Antriebsmaschine (112) nach dem vorhergehenden Anspruch, wobei das Verschlusselement (158) mit der Rotorwelle (132) stoffschlüssig verbunden ist.

7. Verdichter (114) und elektrische Antriebsmaschine nach einem der vorhergehenden Ansprüche, mit einem Gehäuse (124), in dem die Welle (120) drehbar gelagert ist, auf welcher zumindest das Verdichterrad (118) drehfest angeordnet ist, wobei die Rotorwelle (132) an der Welle (120) des Verdichters (114) derart befestigt ist, dass das Verdichterrad (118) axial vorgespannt ist.

## Claims

1. Compressor (114) and electrical drive machine (112) for this compressor (114), wherein the compressor (114) has a compressor wheel (118),
the electrical drive machine comprising at least one stator (126), wherein the stator (126) has at least one polyphase drive winding (128) for generating a drive magnetic field, and
at least one rotor (130), wherein the rotor (130) has at least one rotor shaft (132) and at least one permanent magnet, wherein the rotor shaft (132) is designed to be attached to a shaft (120) of the compressor (114), wherein the shaft (120) of the compressor (114) is connected to the rotor shaft (132) by a screw connection (144), and the rotor shaft (132) has at least one first section (136) and at least one second section (138), wherein the second section (138) axially adjoins the first section (136), wherein the second section (138) concentrically surrounds the rotor shaft (132) and is connected to the first section (136) by way of a cone connection (148), wherein the second section (138) is of hollow design and adjoins one end (146) of the rotor shaft (132) and this end (146) faces the compressor wheel (118) when the rotor shaft (132) is in the attached state and the shaft (120) of the compressor (114) is connected to the first section (136) of the rotor shaft (132) by the screw connection (144), **characterized in that** the rotor (130) is attached to the shaft (120) by way of the rotor shaft (132) being screwed onto the shaft (120) by means of an internal thread (140), wherein the second section (138) comprises a first subsection (139) and at least one second subsection (141), wherein the first subsection (139) has a first mean diameter (d1) and the second subsection (141) has a second mean diameter (d2), wherein the second mean diameter (d2) is greater than the first mean diameter (d1), as a result of which a conical bore is formed on the second section (138), wherein the cone connection (148) comprises a pair of elements, wherein the pair of elements is formed from the conical bore of the second section (138) and a conical outer contour of a projection, which engages into the conical bore, on the compressor wheel (118), wherein the end (146) bears against the compressor wheel (118) when the rotor shaft (132) is in the attached state.

2. Compressor and electrical drive machine (112) according to one of the preceding claims, wherein the rotor (130) is designed to be positioned by means of pressing down on the compressor (114).

3. Compressor and electrical drive machine (112) according to either of the preceding claims, wherein the cone connection (148) is in the form of a truncated cone.

4. Compressor and electrical drive machine (112) according to one of the preceding claims, wherein the rotor shaft (132) has a third section (150), wherein the third section (150) has an axial receiving recess (152), wherein the permanent magnet (134) is received in the axial receiving recess (152).

5. Compressor and electrical drive machine (112) according to the preceding claim, wherein the permanent magnet (134) is received in the axial receiving recess (152) between a supporting element (156) and a closure element (158) in the axial direction of the rotor shaft (132), wherein the closure element (158) is designed to close the axial receiving recess (152).

6. Compressor and electrical drive machine (112) according to the preceding claim, wherein the closure element (158) is connected to the rotor shaft (132) in a materially bonded manner.

7. Compressor (114) and electrical drive machine according to one of the preceding claims, having a housing (124) in which the shaft (120) is rotatably mounted, at least the compressor wheel (118) being arranged in a rotationally fixed manner on the said shaft, wherein the rotor shaft (132) is attached to the shaft (120) of the compressor (114) in such a way that the compressor wheel (118) is axially preloaded.

## Revendications

1. Compresseur (114) et machine d'entraînement électrique (112) pour ce compresseur (114), le compresseur (114) présentant une roue de compresseur (118),
la machine d'entraînement électrique comprenant
au moins un stator (126), le stator (126) présentant au moins un enroulement d'entraînement polyphasé (128) pour produire un champ magnétique d'entraînement, et
au moins un rotor (130), le rotor (130) présentant au moins un arbre de rotor (132) et au moins un aimant permanent, l'arbre de rotor (132) étant réalisé pour être fixé à un arbre (120) du compresseur (114), l'arbre (120) du compresseur (114) étant raccordé à l'arbre de rotor (132) par un assemblage vissé (144), l'arbre de rotor (132) présentant au moins une première partie (136) et au moins une deuxième partie (138), la deuxième partie (138) étant axialement adjacente à la première partie (136), la deuxième partie (138) entourant de manière concentrique l'arbre de rotor (132) et étant raccordée à la première partie (136) par un assemblage conique (148), la deuxième partie (138) étant réalisée de manière creuse et étant adjacente à une extrémité (146) de l'arbre de rotor (132), et cette extrémité (146), à l'état fixé de l'arbre de rotor (132), étant tournée vers la roue de compresseur (118), et l'arbre (120) du compresseur (114) étant raccordé à la première partie (136) de l'arbre de rotor (132) par l'assemblage vissé (144),
**caractérisé en ce que** le rotor (130) est fixé à l'arbre (120) dans lequel l'arbre de rotor (132) est vissé sur l'arbre (120) au moyen d'un taraudage(140),
la deuxième partie (138) comprenant une première section (139) et au moins une deuxième section (141), la première section (139) présentant un premier diamètre moyen (d1) et la deuxième partie (141) présentant un deuxième diamètre moyen (d2), le deuxième diamètre moyen (d2) étant supérieur au premier diamètre moyen (d1) moyennant quoi un alésage conique se forme au niveau de la deuxième partie (138), l'assemblage conique (148) comprenant une paire d'éléments, la paire d'éléments étant formée par l'alésage conique de la deuxième partie (138) et un contour extérieur conique d'une saillie sur la roue de compresseur (118)venant en prise dans l'alésage conique, l'extrémité (146) étant adjacente à la roue de compresseur (118) à l'état fixé de l'arbre de rotor (132).

2. Compresseur et machine d'entraînement électrique (112) selon l'une quelconque des revendications précédentes, dans lequel le rotor (130) est aménagé pour être positionné par emmanchement par pression du compresseur (114).

3. Compresseur et machine d'entraînement électrique (112) selon l'une quelconque des revendications précédentes, dans lequel l'assemblage conique (148) présente une forme de cône tronqué.

4. Compresseur et machine d'entraînement électrique (112) selon l'une quelconque des revendications précédentes, dans lequel l'arbre de rotor (132) présente une troisième partie (150), la troisième partie (150) présentant un creux de réception axial (152), l'aimant permanent (134) étant reçu dans le creux de réception axial (152).

5. Compresseur et machine d'entraînement électrique (112) selon la revendication précédente, l'aimant permanent (134) étant reçu dans la direction axiale de l'arbre de rotor (132) entre un élément d'appui (156) et un élément de fermeture (158) dans le creux de réception axial (152), l'élément de fermeture (158) étant réalisé pour fermer le creux de réception axial (152) .

6. Compresseur et machine d'entraînement électrique (112) selon la revendication précédente, dans lequel l'élément de fermeture (158) est relié à l'arbre de rotor (132) par liaison de matière.

7. Compresseur (114) et machine d'entraînement électrique selon l'une quelconque des revendications précédentes, comprenant un carter (124), dans lequel l'arbre (120) est monté rotatif, sur lequel au moins la roue de compresseur (118) est disposée de manière verrouillée en rotation, l'arbre de rotor (132) étant fixé à l'arbre (120) du compresseur (114) de telle sorte que la roue de compresseur (118) est précontrainte axialement.
